# EUROPÄISCHE PATENTSCHRIFT

(11) **EP 0 597 921 B1**
(45) Veröffentlichungstag und Bekanntmachung des Hinweises auf die Patenterteilung: **03.01.1996**
(21) Anmeldenummer: 92916182.6
(22) Anmeldetag: 29.07.1992
(51) Int. Cl.: H02K 3/12, H02K 15/00

(54) **MEHRPHASIGE, ELEKTRISCHE MASCHINEN MIT VORGEFERTIGTEN WICKLUNGSSCHICHTEN**
POLYPHASE ELECTRIC MACHINE WITH PREFABRICATED WINDING LAYERS
MACHINES ELECTRIQUES POLYPHASEES A COUCHES D'ENROULEMENT PREFABRIQUEES

(30) Priorität: 29.07.1991 DE 4125044
(43) Veröffentlichungstag der Anmeldung: 25.05.1994
(73) Patentinhaber: HILL, Wolfgang, D-76135 Karlsruhe (DE)
(72) Erfinder: HILL, Wolfgang, D-76135 Karlsruhe (DE)
(86) Internationale Anmeldenummer: DE9200617
(87) Internationale Veröffentlichungsnummer: WO9303534

(56) Entgegenhaltungen:
- EP-A- 0 414 927
- CH-A- 662 990
- DE-A- 1 963 868
- DE-A- 2 835 386
- DE-B- 1 123 758
- DE-C- 558 486
- FR-A- 1 405 924
- US-A- 2 469 808
- US-A- 2 683 232
- US-A- 3 719 844

## Beschreibung

Die Erfindung betrifft eine mehrphasige elektrische Maschine gemäß dem Oberbegriff des Anspruch 1.

In einer mehrphasigen Drehfeldwicklung mit versetzt angeordneten Leitersträngen für eine elektrische Maschine entstehen gewöhnlich in den Wickelköpfen Hohlräume, da sich die Leiterstränge unterschiedlicher Phasen in der Projektion vom Luftspalt aus in jeder Polteilung mindestens einmal überschneiden. Hierdurch wird der Raum in den Nuten und den Wickelköpfen schlecht ausgenutzt und die Leiterlänge erhöht. Soll für einen hohen Wirkungsgrad ein vorgegebener niedriger Leiterwiderstand eingehalten werden, so muß die Widerstandserhöhung aufgrund der erhöhten Leiterlänge durch eine Vergrößerung des Leiterquerschnitts kompensiert werden, wodurch das Maschinenvolumen und -gewicht zusätzlich vergrößert wird.

Aus der **US-PS 4 398 112** ist ein geschichteter Leiteraufbau für Scheibenläufer und Linearmotoren bekannt, bei dem ein aus Leiterblechen herausgestanzter Leiterstrang eine Wicklungsschicht darstellt, die von der Nutöffnungsebene aus in Richtung der Nuttiefe in die Nuten eingesetzt wird. Indem identische Wicklungsschichten mit konstanter Leiterhöhe eingesetzt werden, können die Leiterstränge kostengünstig aus einem Blech herausgestanzt werden. Dabei weist die aus der US-PS bekannte Wicklung zwar für alle Leiterstränge sehr kurze Längen auf. da jedoch alle Leiterstränge einen unterschiedlichen Abstand von der Nutöffnungsebene aufweisen müssen, sinkt die Raumausnutzung in den Nuten einer zweiphasigen Maschinen auf 50%, in dreiphasigen Maschinen auf 33,3%, usw.. Hierdurch bleibt zwar das benötigte Leitervolumen gering, jedoch erhöht sich bei der aus der US-PS bekannten Wicklungsbauform das vom magnetischen Fluß durchflossene Eisenvolumen und mit den vergrößerten Maschinenabmeßungen auch das Volumen und Gewicht des Gehäuses.

Mit der Anzahl der Phasen steigt jedoch der Anteil der Maschine, der aktiv zur Drehmomentenbildung beiträgt. Für Maschinen, die hohe Wirkungsgrade mit hohen Kraft- und Leistungsdichten verbinden sollen, ist daher, neben einer hohen Anzahl von Polpaaren und kurzen Leiterlängen, eine gute Raumausnutzung bei einer höheren Phasenanzahl notwendig. Der Anteil des Gehäuses, der magnetischen Rückschlüsse, sowie der Erregerwicklung bzw. des Kurzschlußkäfigs, oder bei permanenterregten Maschinen, der Magnete am Gesamtvolumen der elektrischen Maschine, nimmt mit steigender Nuttiefe ab. Eine hocheffizente, elektrische Maschine sollte daher für hohe Leistungs- und Kraftdichten tiefe Nuten aufweisen.

Der Erfindung liegt daher die Aufgabe zugrunde eine mehrphasige elektrische Maschine, deren Läufer und Ständer sich in einer ebenen Fläche gegenüberliegen und die mindestens einen genuteten weichmagnetischen Körper zur Aufnahme von vorgefertigten Wicklungsschichten aufweist, derart weiter zu bilden, daß auch bei mehreren Phasen eine hohe Raumausnutzung in den Nuten und Wickelköpfen erreicht und dabei die Länge der Leiterstränge unabhängig von der Nuttiefe gering gehalten werden kann.

Eine vollständige Raumausnutzung in den Nuten auch bei mehrphasigen Maschinen mit versetzten Leitersträngen, insbesondere bei Scheibenläufern und Linearmotoren, wird erfindungsgemäß erreicht, indem die Leiterstränge in den Teilbereichen, in denen sie sich in der Projektion von der Nutöffnungsebene aus überschneiden, in Richtung der Nuttiefe im Querschnitt verringert werden. Hierdurch ist es möglich versetzt verlaufende Leiterstränge, die zu unterschiedlichen Phasen gehören, in einer Schicht parallel zur Nutöffnungsebene anzuordnen. Eine hohe Raumausnutzung in den Wickelköpfen wird erreicht, indem der Querschnitt der Leiterstränge außerhalb des weichmagnetischen Körpers verbreitert ist.

Diese Leiterquerschnittsänderungen ergeben kurze Verbindungswege und vergrößerte Leiterquerschnitte in den Wickelköpfen, wodurch über geringe ohmsche Verluste ein hoher Maschinenwirkungsgrad oder ein niedriges Maschinengewicht erreicht wird.

Die komplette Wicklung besteht im einzelnen aus einem Paket baugleicher Wicklungsschichten, die in Richtung der Nuttiefe übereinander geschichtet sind. Jede Wicklungsschicht setzt sich aus vorgefertigten Leitersträngen unterschiedlicher Phasen zusammen.

In der Beschreibung werden die Leiterstränge verbal in Teilbereiche aufgeteilt, wobei innerhalb des weichmagnetischen Körpers liegende Teilbereiche als Nutstäbe, im Wickelkopf liegende Teilbereiche, die in Richtung der Nuten verlaufen, als Nutstabanschlußstücke und ebenfalls im Wickelkopf liegende Teilbereiche, die aber in Richtung der Nutbreite verlaufen als Stege bezeichnet werden. Ein Leiterstrang oder die Reihenschaltung einiger phasengleicher Leiterstränge aufeinanderliegender Wicklungsschichten stellen einen Stromkreis der elektrischen Maschine dar.

In einer vorteilhaften Ausführungsform reduziert sich die Höhe eines Leiterstranges, beim oder kurz nach durchschnittlich jedem zweiten Übergang des Leiterstranges aus dem weichmagnetischen Körper in einen Wickelkopf, auf etwa die Hälfte der Leiterhöhe in den Nuten. Im hierdurch geschaffen Raum sind Stege von Leitersträngen aus der gleichen Wicklungsschicht angeordnet, die jedoch zu anderen Phasen gehören. Die Stege von Leitersträngen einer Wicklungsschicht sind in den Wickelköpfen in Richtung der Nuten hintereinander angeordnet.

Die Verringerung der Leiterhöhe wird im Nutstabanschlußstück größtenteils durch die Verbreiterung des Leiterquerschnitts, um eine Zahnbreite in Richtung der Nutbreite, kompensiert. Teilstrecken des Leiterstranges, die im Wickelkopf keine Überschneidungen mit anderen Leitersträngen der gleichen Schicht aufweisen, können die volle Schichthöhe einnehmen und weisen somit in etwa doppelt so große Leiterquerschnitte wie die Teilstrecken in den Nuten auf.

Neben der 100%igen Raumausnutzung in den Nuten, kann auch der Raum in den Wickelköpfen zu beinahe 100% für die Stromleitung genutzt werden, wenn zwei aufeinanderliegende Wicklungsschichten um eine Polteilung versetzt angeordnet und die Leiterquerschnitte in den Stegen dann entsprechend dem Raumangebot in Richtung der Nuttiefe angepaßt werden.

Erfindungsgemäß sind Leiterstränge unterschiedlicher Phasen im gleichen Abstand zur Nutöffnungsebene angeordnet, wobei die Anzahl dieser Leiterstränge, die zusammen eine selbsttragende Wicklungsschicht bilden, der Phasenanzahl der Maschine entspricht. Das Überschneidungsproblem in den Wickelköpfen wird durch Leiterquerschnittsänderungen gelöst, wobei die Leiterhöhe der sich überschneidenden Leiterstränge einer Schicht so reduzieren, daß die Summe ihrer Leiterhöhen zusammen der Leiterhöhe in den übrigen Teilbereichen des Leiterstranges bzw. der Schicht entspricht. Die Wicklungsschicht weist somit über ihrer gesamten, parallel zur Nutöffnungsebene liegenden Fläche eine konstante Höhe auf, wodurch beim Aufeinanderstapeln mehrerer Schichten zu einer größeren Wicklung keine Hohlräume entstehen.

Die Verbindungswege in den Wickelköpfen werden sehr kurz gehalten, indem die Stege möglichst nahe am weichmagnetischen Körper liegen und unabhängig von der Nuttiefe sind. Für hohe Ansteuerspannungen und Leistungen kann mit der Nuttiefe die Anzahl der in Reihe geschalteten Leiterstränge bzw. die Anzahl der Wicklungsschichten beliebig erhöht werden, wobei die Länge der einzelnen Leiterstränge konstant bleibt. Da in vorteilhaften Ausführungsformen alle Leiterstränge einer Phase identisch sind, bleibt hierbei der Herstellungsaufwand gering.

Die Breite des Leiterstranges nimmt bei jedem Übergang aus dem weichmagnetischen Körper in einen Wickelkopf sprunghaft um die Zahnbreite zu, wodurch Leiterstränge benachbarter Nuten in Richtung der Nutbreite flächig - nur durch eine dünne Isolierschicht getrennt - aneinander liegen. Hierdurch wird im Wickelkopf der Raum zur Stromleitung genutzt, der im weichmagnetischen Körper als Zahn den magnetischen Fluß in Richtung der Nuttiefe führt, und der Leiterquerschnitt in den Nutstabanschlußstücken vergrößert bzw. die Verringerung der Leiterhöhe kompensiert.

Die Leiterstränge weisen in den Wickelköpfen ein kurze Länge auf, da sie unmittelbar in Richtung der Nutbreite von dem jeweiligen Nutstab bzw. Nutstabanschlußstück weggeführt werden. Nur Leiterstränge unterschiedlicher Phasen, die auch in den Nuten den gleichen Abstand zur Nutöffnungsebene aufweisen und daher zusammen eine Wicklungsschicht bilden, beeinflußen sich bei der Raumaufteilung im Wickelkopf gegenseitig. Während die Leiterlänge und der Herstellungsaufwand nahezu unabhängig von der Nuttiefe ist, nehmen die mit dem Rückschluß- und Magnetvolumen verbundenen Verluste und Kosten mit steigender Nuttiefe ab.

Ist die Summe der Längen der beiden Nutstabanschlußstücke, die sich jeweils an einen Nutstab anschließen, in allen Leitersträngen gleich, so können einstückige Leiterstränge nacheinander zu einer Wicklungsschicht zusammengesetzt werden. Hierdurch vereinfacht sich die Herstellung der gesamten Wicklung wesentlich, da die Leiterstränge unbeeinflußt vom übrigen Aufbau in ihre endgültige Form gebracht, isoliert und geprüft werden können. Diese Ausführungsform wird in der Beschreibung als *Wicklung mit unsymmetrischen Wickelköpfen* bezeichnet.

Die Ausführungsform in der in jedem Leiterstrang die Abstände der Stege vom weichmagnetischen Körper in den beiden Wickelköpfen jeweils gleich sind, wird in der Beschreibung als *Wicklung mit symmetrischen Wickelköpfen* bezeichnet. Auch sie zeichnet sich dadurch aus, daß einstückige Leiterstränge in ihrer vorgefertigten Form zu einer Wicklungsschicht zusammengefügt und, wenn kein Kleber verwendet wird, die kompakte Wicklungsschicht auch jederzeit wieder in die einzelnen Leiterstränge zerlegt werden kann. Durch die einstückige Herstellung eines Leiterstranges wird garantiert, daß der Leiterstrang den seinen Querschnitten und Längen entsprechenden, niedrigsten Innenwiderstand aufweist. Dies ist eine Voraussetzung für das Erreichen günstiger Wirkungsgrade und hoher Leistungs- und Kraftdichten.

Wird von zwei baugleichen, aufeinanderliegenden Wicklungsschichten die Obere an der Nutöffnungsebene gespiegelt, anschließend in Richtung der Nutbreite genau um eine Polteilung verschoben und so mit der unteren Schicht zusammengefügt, sowie die Leiterhöhe in den Stegen dem neuen Raumangebot angepaßt, erhält man eine im folgenden als *zweilagige Wicklungsschicht* bezeichnete Ausführungsform. In einer zweilagigen Wicklungsschicht kommen am Umfang auf jeden Steg jeweils zwei Nutstabanschlußstücke. Die Querschnittsfläche aller Nutstabanschlußstücke kann nun gleich ausgelegt werden. Hierdurch entstehen am Umfang der Wickelköpfe keine lokalen Unterschiede in der Verlustwärmerzeugung. Durch diese konstruktive Ausgestaltung ergeben sich, über eine vollständige Raumausnutzung in den Wickelköpfen, niedrige ohmsche Widerstände, die entweder den Maschinenwirkungsgrad erhöhen oder über verringerte Leiterquerschnitte zu einem niedrigeren Gewicht führen. Die Vermeidung von Hohlräume in den Wicklungsschichten, zwischen den Wicklungsschichten und zwischen den Wickelkopfoberflächen und den Kühlkörpern, verbessert die passive Wärmeabführung.

Neben Linearmotoren stellt die Bauform als Scheibenläufer ein großes Anwendungsgebiet der Erfindung dar. Aufgrund der erreichbaren, hohen Kraftdichte eignet sich ein permanenterregter Scheibenläufer insbesondere als Direktantrieb zum Einbau in die Radfelge eines Fahrzeuges. Hierbei kann der Rotor mit dem Felgenbett axial verschieblich verbunden sein, wodurch eine Beanspruchung des Rotors auf Biegung durch beispielsweise bei Kurvenfahrten auftretende axiale Kräfte vermieden wird. Hierbei können die den Wickelköpfen und Rückschlüssen vorgelagerten Kühlkörper als tragende Elemente der Felge und die Rotorscheibe als Bestandteil einer Bremseinrichtung ausgebildet sein. Die Bruchgefahr für die leistungsstarken Magnete, verringert sich hierdurch wesentlich, und der gesamte Felgenaufbau ist weniger starr und leichter ausführbar.

Reicht die passive Kühlung nicht aus, werden nach einer besonderen Ausführungsform Wicklungsschichten durch flache, von einem Kühlmittel durchfloßene Kühlelemente ersetzt, ohne daß dies in einer Erhöhung des Rückschluß-, Magnet- und Leitervolumens resultiert.

Die **Zeichnungen** stellen vorteilhafte Ausführungsformen der Erfindung dar.
Fig. 1 zeigt eine erfindungsgemäße, elektrische Maschine als Scheibenläufer eingebaut in eine Radfelge in einer Draufsicht im Schnitt, der durch die Nut geführt wird;
Fig. 2 zeigt einen Schnitt gemäß der Linie II - II aus Fig. 1;
Fig. 3a zeigt einen Schnitt gemäß der Linie III - III aus der Fig. 1, wobei ein Schnitt durch die obere Schichthälfte einer vollstängigen Wicklungsschicht für eine vierphasige, zwölfpolige Wicklung mit unsymmtrischen Wickelköpfen dargestellt ist;
Fig. 3b zeigt einen Schnitt durch die untere Schichthälfte der in Fig. 3a dargestellten Wicklungsschicht;
Fig. 4a zeigt einen Leiterstrang aus Fig. 3;
Fig. 4b zeigt einen Leiterstrang aus einer zwölfpoligen, vierphasigen Wicklung mit symmetrischen Wickelköpfen;
Fig. 5 zeigt Ausschnitte aus den drei Leitersträngen einer dreiphasigen Wicklungsschicht mit unsymmetrischen Wickelköpfen beim Zusammensetzen;
Fig. 6 zeigt Ausschnitte aus den drei Leitersträngen einer dreiphasigen Wicklungsschicht mit symmetrischen Wickelköpfen beim Zusammensetzen;
Fig. 7 zeigt sechs Segmente die zu einem Teilbereich eines Leiterstranges zusammengesetzt werden;
Fig. 8 zeigt den Leiterverlauf und Schnitte durch die Stegschichten einer zweilagigen Wicklungsschicht aus einer vierphasigen Wicklung für einen Linearmotor.

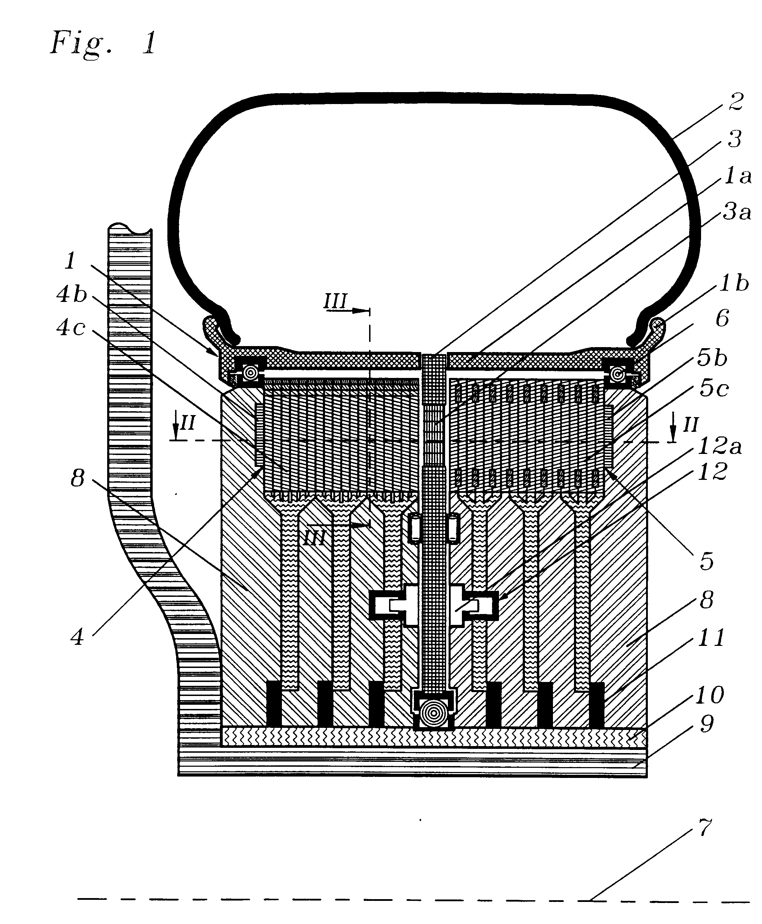

Aus der **Fig. 1** ergibt sich der Aufbau eines in einer Radfelge eingebauten Scheibenläufers, mit vorgefertigten Wicklungsschichten. Hierbei ist die Radfelge mit **1** bezeichnet und der von dem Felgenhorn la aufgenommene Reifen mit **2.** Der Scheibenläufer selbst besteht aus der Rotorscheibe **3**, in die Permanentmagnete **3a** eingebaut sind, und den beiden Statorhälften **4** und **5**. Die Statorhälften **4** und **5** sind gegenüber der Felge **1** bzw. dem Felgenbett **1b** durch Lager **6** abgestützt, und bestehen aus jeweils einem weichmagnetischen Körper **4a**, **5a**, von dem in Fig. 1 nur der Rückschluß **4b**, **5b** sichtbar ist, und den Wicklungen **4c** bzw. **5c**, die hier zur Veranschaulichung der Erfindung unterschiedlich ausgelegt sind. Links der Rotorscheibe **3** ist eine Wicklung **4c** mit unsymmetrischen Wickelköpfen und rechts eine Wicklung **5c** mit zweilagigen Wicklungsschichten und symmetrischen Wickelköpfen dargestellt.

Die Rotorscheibe **3** ist mit dem Felgenbett **1b** durch einen Zahntrieb derart verbunden, daß bei axialer Belastung die Felge **1** axial wandern kann, um eine Beanspruchung des Rotors auf Biegung zu vermeiden. Hierbei kann das Felgenbett beispielsweise als Käfig mit axial verlaufenden Nuten ausgebildet sein, in die Zähne der Rotorscheibe eingreifen. Die axiale Erstreckung der Zähne ist geringer als die der Nuten.

Die Rückschlüße **4b**, **5b** der weichmagnetischen Körper sowie die Wicklungen **4c** und **5c** sind eingebettet in den Kühlkörper **8**, der im wesentlichen als Träger des Felgenbettes **1b** fungiert, und mit der Nabe **9** in Verbindung steht. Die Nabe ist zur Gewichtsreduzierung als Hohlwelle ausgeführt, wobei im Hohlraum bis zur Rotationsachse **7** auch die Leistungselektronik untergebracht werden könnte. Im Kühlkörper befinden sich die Stromzuführungen für die einzelnen Wicklungsschichten, wobei der Strom durch Kommutierungseinrichtungen, bestehend aus einer Stromverteilerplatte **10** und Leistungstransistoren **11**, den Wicklungsschichten zugeführt wird. Im Kühlkörper selbst ist noch eine Scheibenbremseinrichtung **12** vorgesehen, wobei die Bremsbacken **12a** der Scheibenbremseinrichtung auf die Rotorscheibe **3** wirken.

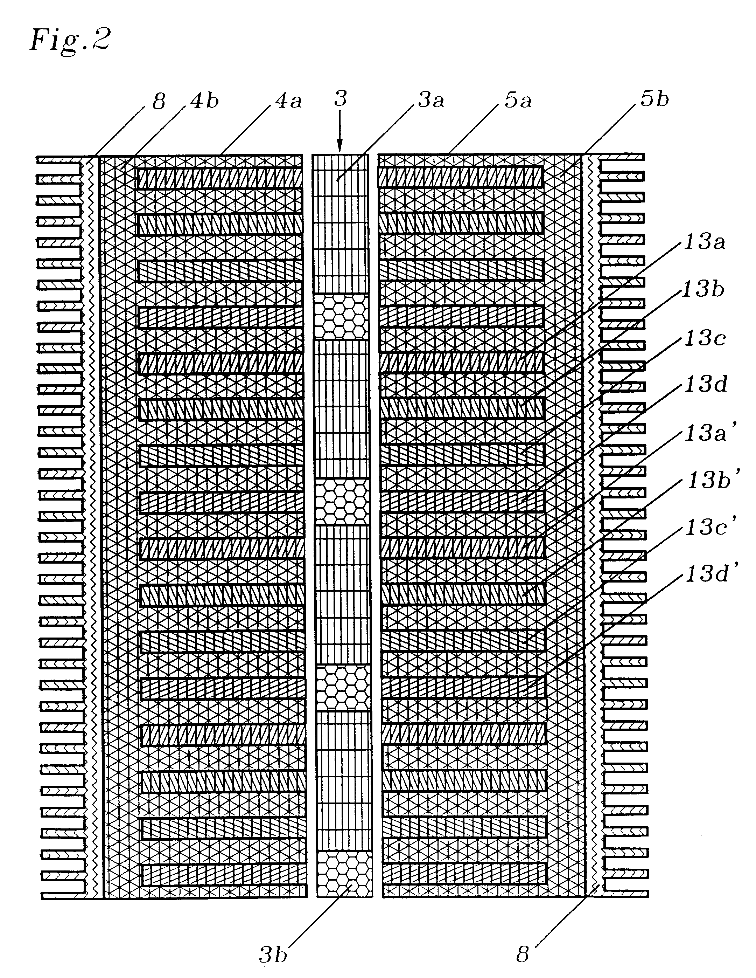

**Fig. 2** zeigt einen Schnitt gemäß der Linie II - II aus Fig. 1. Dargestellt ist eine Wicklung mit vier Nuten pro Polteilung. Die eine Wicklungsschicht bildenden Nutstäbe sind mit **13a**-**13d** bezeichnet, die Nuten der benachbarten Polteilung entsprechend mit **13a'**- **13d'**. Bei der Darstellung gemäß Fig. 2 wird erkennbar, daß der Rotor zwischen den Magnetsegmente **3a** Pollücken **3b** aufweist.

**Fig. 3a** zeigt eine Ansicht gemäß der Linie III - III aus Fig. 1. Auch hier ist die Aufteilung derart getroffen, daß eine vierphasige Wicklung mit unsymmetrischen Wickelköpfen vorgesehen ist. Die in den Nuten einsitzenden Nutstäbe sind wieder mit **13a**-**13d** bezeichnet und mit den Nutstäben **13a'**- **13d'** durch Nutstabanschlußstücke **15a-15d** bzw. **15a'-15d'** sowie Stege **14a-14d** verbunden; der Steg **14a** ist nicht sichtbar, da er hinter den Nutstabanschlußstücken **15a-15c** liegt. Eine derartige Einheit wie sie in Fig. 3a in der Draufsicht auf die obere Schichthälfte dargestellt ist, bildet eine Wicklungsschicht **4d** und durch die axiale Schichtung mehrerer dieser Wicklungsschichten hintereinander entsteht die komplette Wicklung.

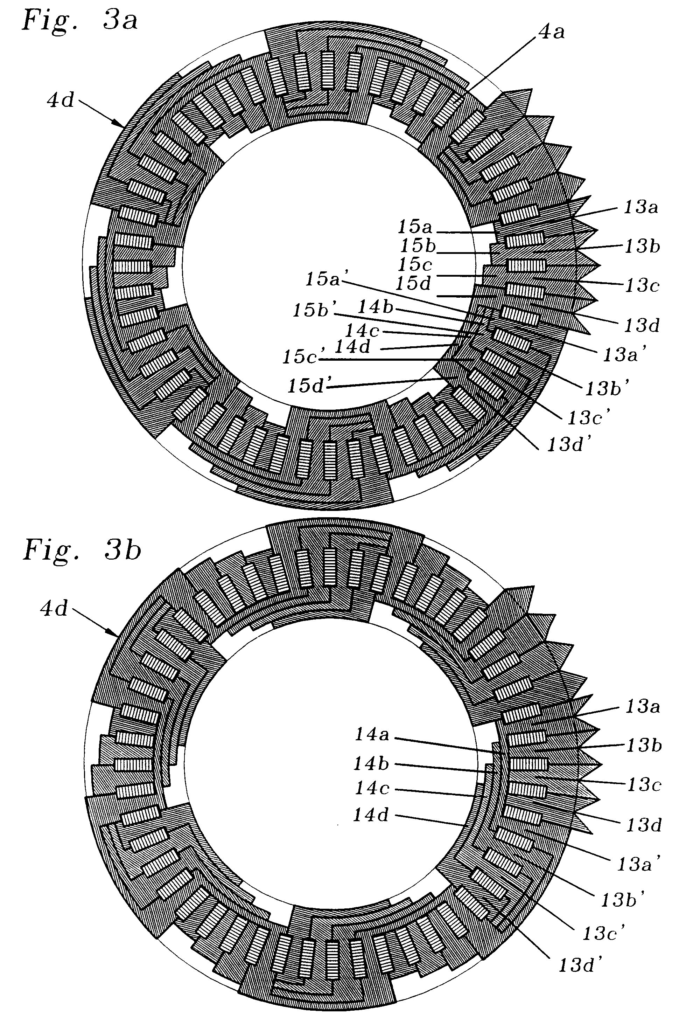

In **Fig. 3b** ist die gleiche Wicklungsschicht **4d** wie in Fig. 3a jedoch in einem Schnitt durch die untere Schichthälfte dargestellt. Hier ist der Steg **14a** sichtbar und dafür die darüberliegenden Nutstabanschlußsstücke **15a-15d** nicht. Die Schraffuren der unteren Schichthälfte sind gegenüber den Schraffuren für die obere Schichthälfte um 90° gedreht.

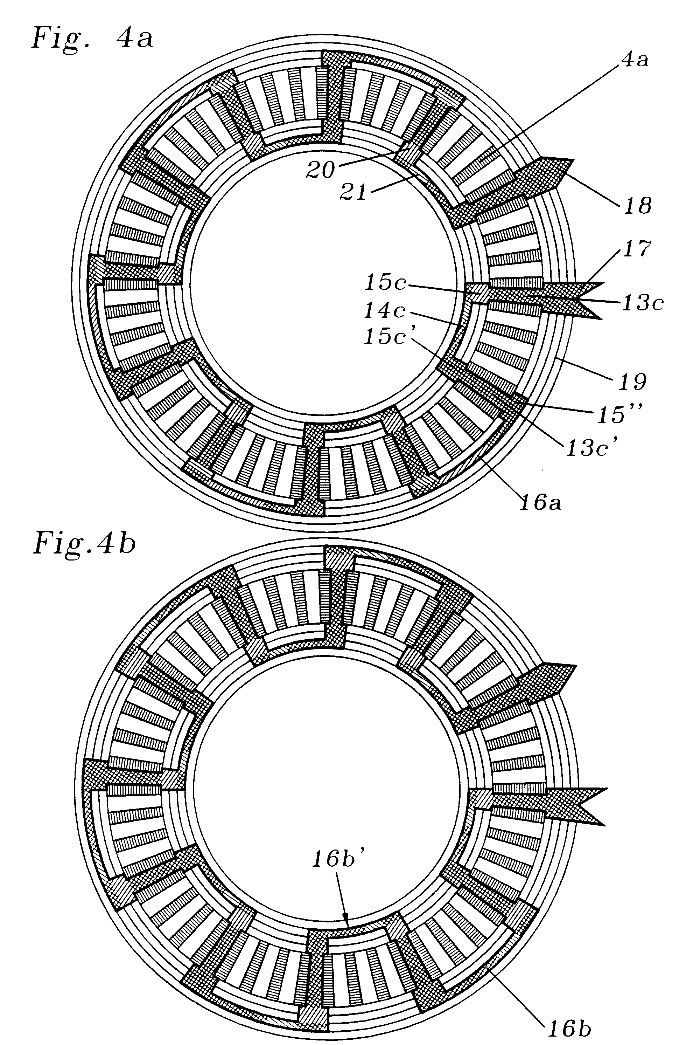

**Fig. 4a** zeigt einen Leiterstrang der Wicklungsschicht aus Fig. 3, wobei wieder eine Wicklung mit unsymmetrischen Wickelköpfen in einem vierphasigen Scheibenläufer mit drei Polpaaren dargestellt ist. Neben den durch bogenförmige Schraffurlinien symbolisierten Zähnen des weichmagnetischen Körpers **4a**, sind die beiden Wickelköpfe jeweils durch vier Hilfslinien **19** angedeutet, welche die Grenzen der vier Stegbereiche darstellen.

Der Leiterstrang wird durch zwei Schraffurmuster gekennzeichnet, wobei die von links unten nach rechts oben verlaufende Schraffurlinien, die obere Schichthälfte **20** und die von links oben nach rechts unten verlaufenden Schraffurlinien die untere Schichthälfte **21** symbolisieren. Damit ist durch die Schraffurart ersichtlich in welchen Bereichen der Leiterstrang die volle Schichthöhe einnimmt und an welchen Stellen die untere oder die obere Schichthälfte Lücken aufweist.

Ein Leiterstrang umfaßt in der dargestellten Ausführungsform den gesamten Maschinenumfang minus einer Polteilung. An dieser Lücke erfolgt entweder die Stromzuleitung **17** und Stromableitung **18** zur Ansteuerung oder, wenn in der Maschine mehrere Leiterstränge in Reihe geschaltet werden, der Übergang zu einem in Richtung der Nuttiefe benachbarten Leiterstrang. Der Wickelkopfraum zwischen den Anschlüßen **17** und **18** wird von Zu- und Ableitungsanschlüßen anderer Leiterstränge genutzt.

Mit dem Prinzip des variablen Leiterquerschnitts in den Wickelköpfen, lassen sich natürlich auch alternative Leiterstrangverläufe realisieren, bei denen die Anordnungen der Überschneidungen bzw. Engstellen sich vom bisher dargestellten Ausführungsbeispiel unterscheidet.

Als Variationsbeispiel wird in **Fig. 4b** ein Leiterstrang einer Wicklungsschicht aus einer Wicklung mit symmetrischen Wickelköpfen in einem vierphasigen Scheibenläufer mit drei Polpaaren dargestellt. Der Steg **16b** im äußeren Wickelkopf weist im Gegensatz zum Steg **16a** in Fig. 4a den gleichen Abstand zum weichmagnetischen Körper auf wie die Stege im inneren Wickelkopf **16b'** bzw. **14c.** Die Schraffurlinien haben die gleiche Bedeutung wie in Fig. 4a.

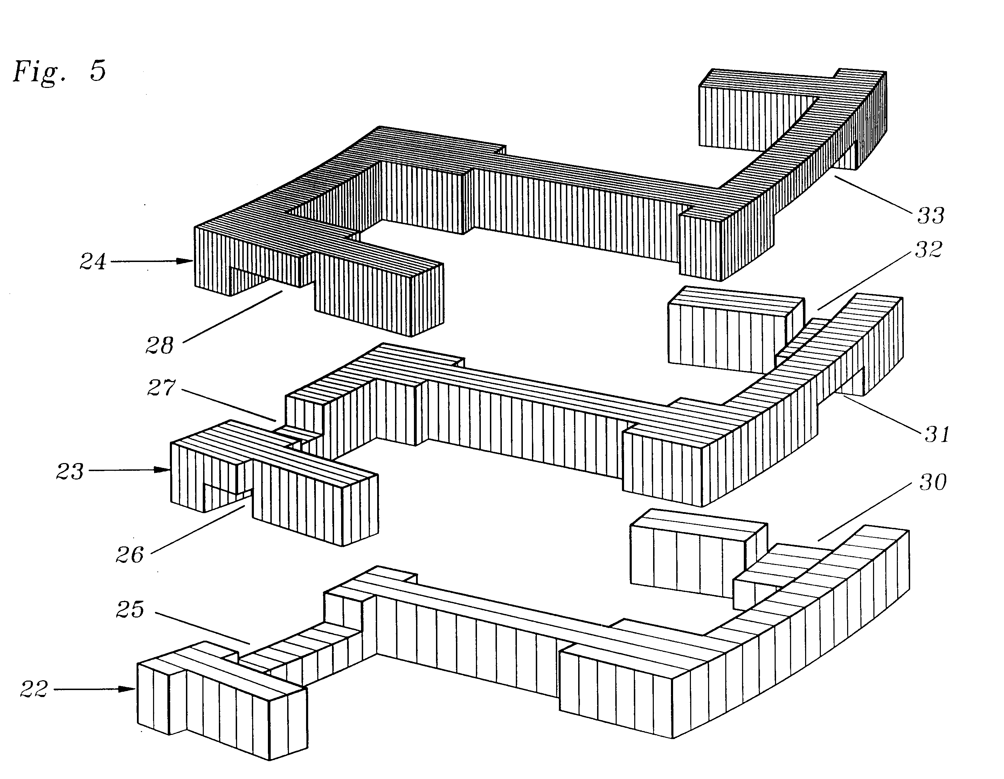

**Fig. 5** zeigt Ausschnitte aus den drei Leitersträngen einer dreiphasigen Wicklungsschicht mit unsymmetrischen Wickelköpfen. Von jedem Leiterstrang ist nur ein Teilbereich darstellt der zwei Polteilungen entspricht. Dabei beginnen alle Leiterstränge fiktiv in der Mitte ihrer Nut in der ersten Polteilung und enden in der Nutmitte der dritten Polteilung. Die einstückig dargestellten Teilstücke gehören zu Leitersträngen aus einer ringförmigen Wicklungsschicht für einen Scheibenläufer und weisen daher gebogene Stege mit unterschiedlichen Längen auf. Der untere Leiterstrang **22** weist auf der linken Seite im Bereich der Stege **25** Aussparungen in der oberen Schichthälfte und auf der rechten Seite im Bereich der verlängerten Nutstabanschlußstücke **30** Aussparungen ebenfalls in der oberen Schichthälfte auf. Beim Einsetzen des mittleren Leiterstranges **23** in den Leiterstrang **22** ergänzen sich die Aussparungen in den Stegen **25** bzw. **31** und den Nutstabanschlußstücken **26** bzw. **30** derart, daß die beiden Stränge in einer Schicht liegen können. Die Aussparungen in den Leitersträngen **22** und **23** ermöglichen weiterhin das Einsetzen des Leiterstrangs **24**, wobei das in der Leiterhöhe reduzierte Nutstabanschlußstück **28** in den Aussparungen der Stege **25** und **27** sowie der ebenfalls im Querschnitt verminderte Steg **33** über den Nutstabanschlußstücken **30** und **32** verläuft.

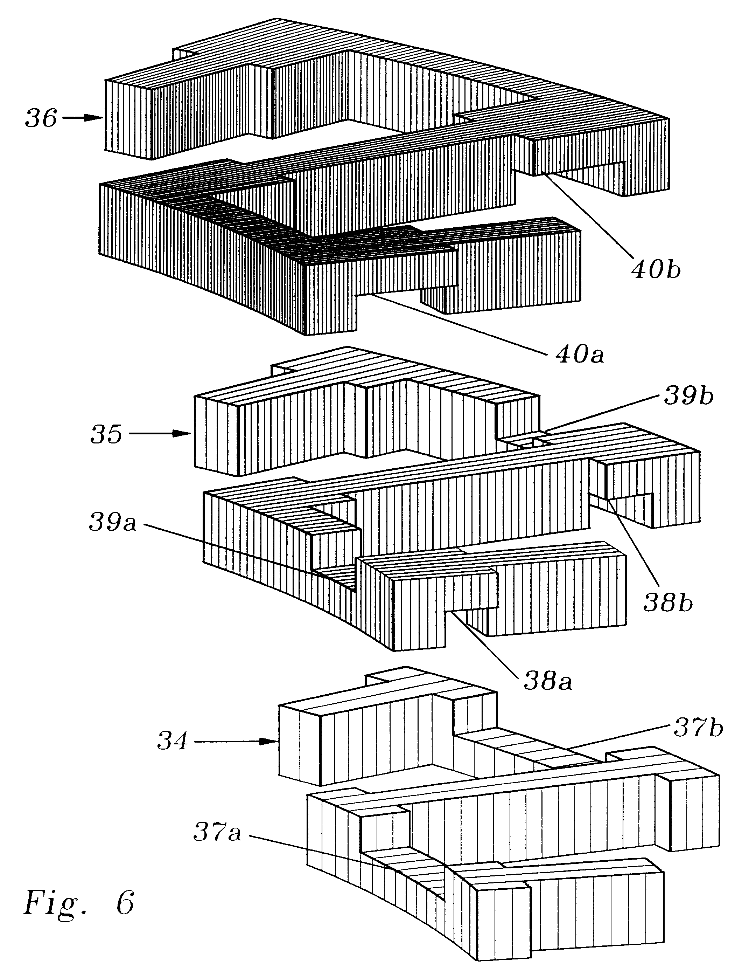

Die Leiterstränge in **Fig. 6** weisen in beiden Wickelköpfen gleich ausgebildete Nutstabanschlußstücke und Stege auf. Wiederum ist ein einfaches Zusammensschieben der Leiterstränge in Richtung der Nuttiefe möglich, indem die in ihrer Leiterhöhe verminderten Nutstabanschlußstücke **38a, 38b** des Leiterstranges **35** in die Aussparungen der Stege **37a, 37b** von Leiterstrang **34** eingeschoben werden. Die Aussparungen der Nutstabanschlußstücke **40a** bzw. **40b** des Leiterstranges **36** passen genau in den Raum der durch die Aussprungen in den Stegen **37a** und **39a** bzw. **37b** und **39b** gebildet wird.

Durch die verringerte Leiterhöhe in den Aussparungen können alle drei Teilstücke zusammengesetzt eine Wicklungsschicht mit konstanter Höhe bilden.

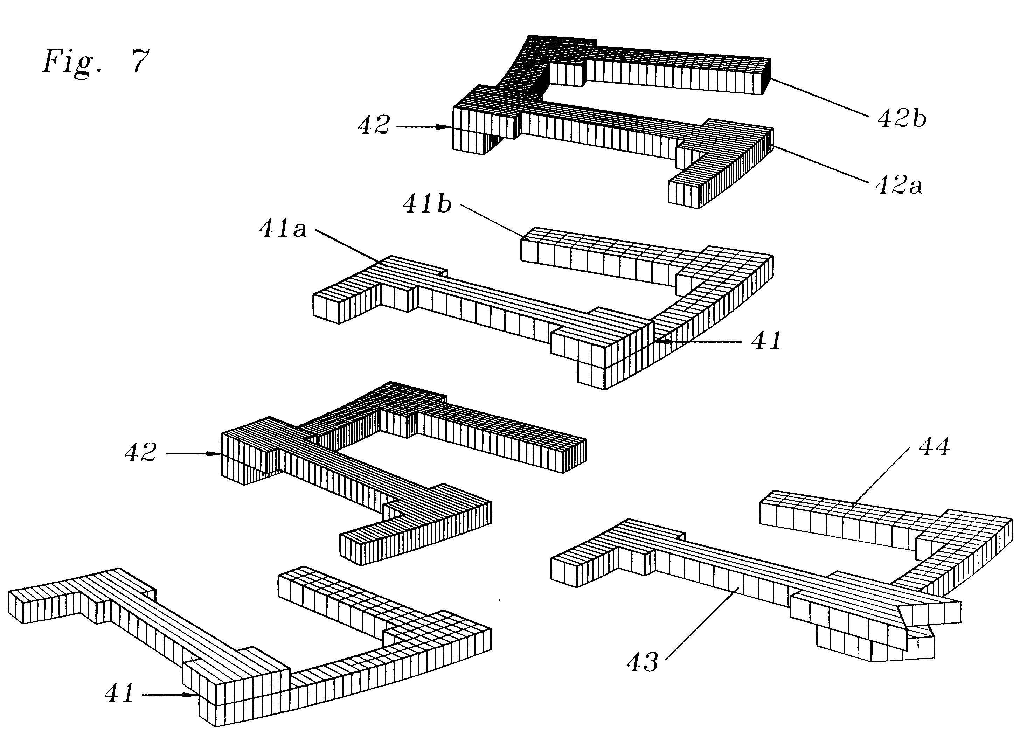

Neben dem Zuleitungssegment **43** und Ableitungssegment **44**, die in **Fig. 7** unten rechts in einer speziellen Ausführungsform dargestellt sind, besteht jeder Leiterstrang, unabhängig von seiner Länge und seiner Lage in einer Wicklungsschicht, aus nur zwei unterschiedlichen Segmentbauformen **41** und **42**, die wiederum aus vier unterschiedlichen Stanzteilen **41a** und **41b** bzw. **42a** und **42b** zusammengefügt wurden. Die in einer von links unten nach rechts oben verlaufenden Reihe dargestellten vier Segmente **41** und **42** werden in dieser Reihenfolge in eine entsprechende Form eingesetzt und in dieser anschließend unter Druck so weit erwärmt, daß sie zu einem einstückigen Leiterstrang verschmelzen.

Eine weitere Ausführungsform der Erfindung stellen zweilagigen Wicklungsschichten dar, die eine gleichmäßige und 100 %ige Ausnutzung des Wickelkopfraumes ermöglichen.

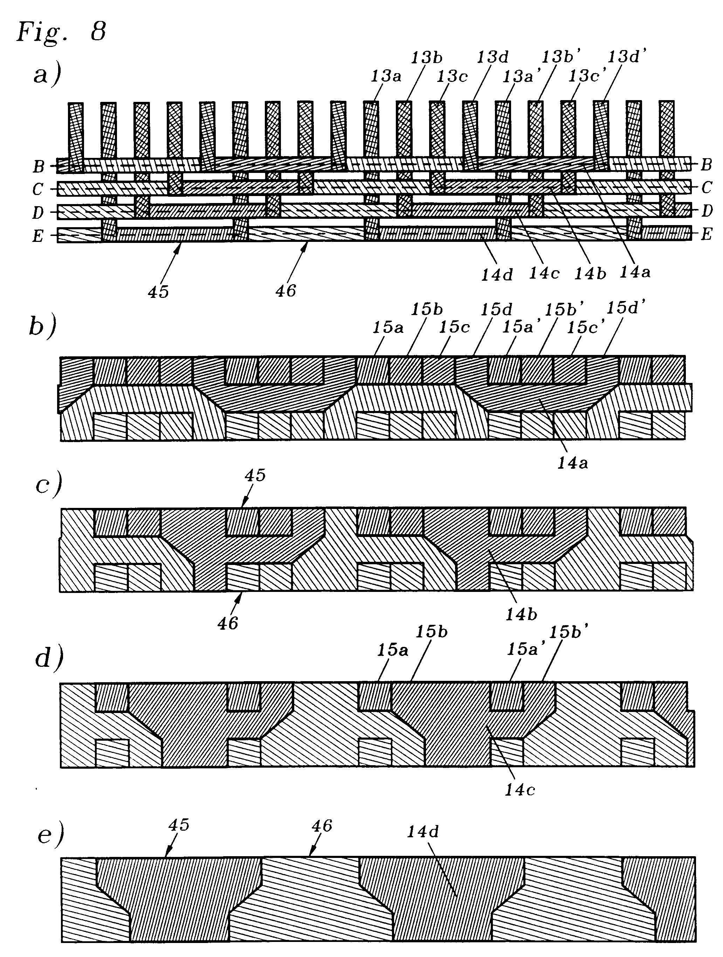

**Fig. 8 a)** zeigt einen Ausschnitt aus dem Leiterverlauf in einer zweischichtigen Wicklungslage für einen vierphasigen Linearmotor, wobei der Ausschnitt vier Polteilungen in einem symmetrischen Wickelkopf umfaßt. In der fiktiven Schnittzeichnung sind die Verläufe aller Leiterstränge der beiden sich ergänzenden Schichten eingezeichnet, wobei auf die Verbreiterung der Nutstabanschlußstücke verzichtet und auch zwischen den Stegen ein Abstand eingehalten wird, der real nicht existieren sollte. Die Leiterverläufe der oberen Schicht **45** sind dichter schraffiert und, wie in Fig. 3, in Nutstäbe **13a.13d**, Nutstabanschlußstücke **15a-15d** und Stege **14a**.**14b** unterteilt und durch Schraffurlinien, die von links unten nach rechts oben verlaufen gekennzeichnet. Die Schraffurlinien der Leiterverläufe der unteren Schicht **46** sind um 90° gedreht, verlaufen also von links oben nach rechts unten.

Weiterhin verdeutlicht Fig. 8a wo die Schnitte B - B, C - C, D - D und E - E liegen, die in **Fig.** **8b, 8c, 8d** und 8e dargestellt sind. Diese Schnittzeichnungen stellen die realen Seitenansicht aller Stegschichten in einem Wickelkopf der zweilagigen, vierphasigen Wicklungsschicht dar. Die Schraffurarten entsprechen den in Fig. 8a verwendeten Schraffuren. Die Leiterhöhe der Stege entspricht zum Teil, insbesondere in den äußeren Wickelkopfbereichen, der doppelten Leiterhöhe der Nuten, wobei die beiden Schichten jedoch identisch aufgebaut bleiben.

## Patentansprüche

1. Mehrphasige elektrische Maschine mit vorgefertigten Wicklungsschichten, die mindestens einen weichmagnetischen Körper mit Nuten aufweist und deren Läufer (1,3) und Ständer (4,5) sich in einer ebenen Fläche, der Nutöffnungsebene, gegenüber liegen, wobei die Wicklungsschichten parallel zur Nutöffnungsebene angeordnet sind,
**dadurch gekennzeichnet**, daß eine Wicklungsschicht (4d) aus mindestens zwei Leitersträngen (22 - 24 bzw. 34 - 36) unterschiedlicher Phasen besteht, die auf beiden Seiten außerhalb des weichmagnetischen Körpers (4a) Leiterquerschnittsänderungen (25 - 33 bzw. 37a - 40b) aufweisen.

2. Mehrphasige elektrische Maschine mit vorgefertigten Wicklungsschichten nach Anspruch 1, **dadurch gekennzeichnet**, daß der Leiterquerschnitt eines Leiterstranges (22 bzw. 34) einer Wicklungsschicht (4d) in Teilbereichen (25, 30 bzw. 37a, 37b), die außerhalb des weichmagnetischen Körpers (4a) liegen, eine kleinere Ausdehnung in Richtung der Nuttiefe aufweist, als innerhalb des weichmagnetischen Körpers.

3. Mehrphasige elektrische Maschine mit vorgefertigten Wicklungsschichten nach Anspruch 2, **dadurch gekennzeichnet**, daß der Leiterquerschnitt eines Leiterstranges (23 bzw. 35) einer Wicklungsschicht (4d) in Teilbereichen (26, 32 bzw. 38a, 38b), die in Richtung der Nuten verlaufen, aber außerhalb des weichmagnetischen Körpers liegen, in Richtung der Nuttiefe verkleinert ist, wobei im durch die Leiterquerschnittsänderung gebildeten Raum Stege (25, 33 bzw. 37a, 37b) von anderen Leitersträngen (22, 24 bzw. 34) derselben Wicklungsschicht angeordnet sind.

4. Mehrphasige elektrische Maschine mit vorgefertigten Wicklungsschichten nach Anspruch 1, **dadurch gekennzeichnet**, daß der Leiterquerschnitt eines Leiterstranges (23, 24 bzw. 36) einer Wicklungsschicht in Teilbereichen (26, 32, 28 bzw. 40a, 40b), die in Richtung der Nuten verlaufen, aber außerhalb des weichmagnetischen Körpers (4a) liegen, gegenüber den Teilbereichen (13a - d), die im weichmagnetischen Körper liegen, in Richtung der Nutbreite vergrößert ist.

5. Mehrphasige elektrische Maschine mit vorgefertigten Wicklungsschichten nach Anspruch 1, wobei in einer Nut nur Leiterstränge unterschiedlicher Wicklungsschichten in Richtung der Nuttiefe übereinanderliegend angeordnet sind,
**dadurch gekennzeichnet**, daß innerhalb einer Wicklungsschicht (4d) die in Richtung der Nutbreite verlaufenden Teilbereiche (25, 27 bzw. 37a, 39a) der Leiterstränge (22, 23 bzw. 34, 35) unterschiedlicher Phasen in Richtung der Nuten hintereinander und mit gleichem Abstand zur Nutöffnungsebene angeordnet sind.

6. Mehrphasige elektrische Maschine mit vorgefertigten Wicklungsschichten nach einem der voranstehenden Ansprüche,
**dadurch gekennzeichnet**, daß die Summe der Längen der beiden Nutstabanschlußstücke (15c' und 15"), die mit einem Nutstab verbunden sind, für alle Leiterstränge (22, 23, 24) einer Wicklungsschicht (4d) gleich ist.

7. Mehrphasige elektrische Maschine mit vorgefertigten Wicklungsschichten nach einem der voranstehenden Ansprüche,
**dadurch gekennzeichnet**, daß innerhalb einer Wicklungsschicht (4d) die in Richtung der Nutbreite verlaufenden Teilbereiche (37a, 37b bzw. 39a, 39b) der Leiterstränge (34, 35) in beiden Wickelköpfen den gleichen Abstand vom weichmagnetischen Körper (4a) aufweisen.

8. Mehrphasige elektrische Maschine mit vorgefertigten Wicklungsschichten nach einem der voranstehenden Ansprüche,
**dadurch gekennzeichnet**, daß Leiterstränge, die in Richtung der Nuttiefe im weichmagnetischen Körper aufeinander liegen, um eine Polteilung versetzt angeordnet sind, wobei die Leiterhöhe in Richtung der Nuttiefe in den Stegen (14b - d) zum Teil der doppelten Leiterhöhe der Nutstäbe (13a -d) entspricht.

9. Mehrphasige elektrische Maschine mit vorgefertigten Wicklungsschichten nach einem der voranstehenden Ansprüche, wobei die elektrische Maschine ein permanenterregter Scheibenläufer ist,
**dadurch gekennzeichnet**, daß der permanenterregte Scheibenläufer als Direktantrieb im Rad untergebracht ist, wobei die Rotorscheibe (3) mit der Felge (1) über einen Zahntrieb, der nur die tangentialen Kräfte spielfrei auf die Felge überträgt, verbunden ist.

10. Mehrphasige elektrische Maschine mit vorgefertigten Wicklungsschichten nach einem der voranstehenden Ansprüche,
**dadurch gekennzeichnet**, daß zwischen zwei Wicklungsschichten ein flaches Kühlelement, das von einem Kühlmittel durchflossen wird, angeordnet ist.

## Claims

1. Polyphase electric machine with prefabricated winding layers, **comprising** a soft magnetic body with grooves and a plane surface toward the gap, parallel to this gap surface plane are arranged the winding layers, said winding layer (4d) consisting of at least two conductor lanes (22 - 24, 34 - 36) of different phases, said conductor lanes having on both sides outside the soft magnetic body (4a) variations of the conductor cross section (25 - 33, 37a - 40b).

2. Polyphase electric machine with prefabricated winding layers as recited in claim 1, **comprising** a conductor lane (22, 34) of a winding layer (4d), said conductor lane having in partial sections (25, 30, resp. 37a, 37b) arranged outside the soft magnetic body (4a) a smaller cross section in direction to the groove depth than in sections lying inside the soft magnetic body.

3. Polyphase electric machine with prefabricated winding layers as recited in claim 2, **comprising** a conductor lane (23, resp. 35) of a winding layer (4d), said conductor lane having partial sections (26, 32, resp. 38a, 38b), said partial sections running in direction to the groove length, but lying outside the soft magnetic body, and having decreased cross sections in direction to the groove depth, the decrease of said cross sections creating a space in which links (25, 33, resp. 37a, 37b) of the other conductor lanes (22, 24, resp. 34) of the same winding layer are arranged.

4. Polyphase electric machine with prefabricated winding layers as recited in claim 1, **comprising** a conductor lane (23, 24 resp. 36) of a winding layer (4d), said conductor lane having partial sections (26, 28, 32, resp. 40a, 40b), said partial sections running in direction to the groove length, but lying outside the soft magnetic body, and being enlarged in relation to the partial sections (13a - d) which are lying in the soft magnetic body.

5. Polyphase electric machine with prefabricated winding layers as recited in claim 1, in which conductor lanes of different winding layers are stacked on top of each other in a groove in direction to the groove depth, **comprising** a winding layer (4d) in which partial sections (25, 27, resp. 37a, 39a) of conductor lanes (22, 23, resp. 34, 35) are running in direction to the groove width, said partial sections of conductor lanes of different phases being arranged in direction to the groove length behind each other and having the same distance to the gap surface plane.

6. Polyphase electric machine with prefabricated winding layers as recited in claim 1, **comprising** bar connection sections, the sum of said bar connection sections (15' and 15'') which are connected with a respective bar, being equal for all conductor lanes (22, 23, 24) of a winding layer (4d) .

7. Polyphase electric machine with prefabricated winding layers as recited in claim 1, **comprising** a winding layer (4d) having conductor lanes (34, 35) with partial sections (37a, 37b, resp. 39a, 39b) running in direction of the groove width, said partial sections showing in both winding overhangs the same distance to the soft magnetic body (4a) .

8. Polyphase electric machine with prefabricated winding layers as recited in claim 1, **comprising** conductor lanes being stacked on top of each other in direction to the groove depth in the soft magnetic body and being set off by one pole pitch in relation to each other, the height in direction to the groove depth of said conductor lanes corresponding in partial areas of the links (14b - 14d) to the double height of the bars (13a - 13d).

9. Polyphase electric machine with prefabricated winding layers as recited in one of the above claims, said electric machine being designed as a permanent excited disk armature, **comprising** comprising a rotor disk (3) being directly connected with a wheel rim (1) by a pinion, said pinion transmitting the force without play to the wheel rim.

10. Polyphase electric machine with prefabricated winding layers as recited in one of the above claims, **comprising** a flat cooling element being arranged between two winding layers and being cooled by a coolant which circulates through said cooling element.

## Revendications

1. Machine électrique polyphasée à couches d'enroulement préfabriquées, laquelle possède au moins un corps magnétique doux avec des rainures de cale et dont le rotor (1, 3) et le stator (4, 5) font face sur une surface égale, la plaine de la fente d'air, lesdites couches d'enroulement se trouvant parallèle à la plaine de la fente d'air,
**caractérisée** en ce qu'une couche d'enroulement (4d) se compose au moins de deux cordes conductrices (22 - 24 au 34 -36) de phases différentes, lesquelles montrent des variations de la section du conducteur (25 - 33 au 37a - 40b) des deux côtés en dehors du corps magnétique doux (4a).

2. Machine électrique polyphasée à couches d'enroulement préfabriquées selon la revendication 1,
**caractérisée** en ce que la section du conducteur d'une corde conductrice (22 au 34) d'une couche d'enroulement (4d), ladite corde conductrice possédant dans des zones partielles (25, 30 au 37a, 37b) arrangées en dehors du corps magnétique doux (4a) une section plus petite en direction de la profondeur de la rainure que dans les sections se trouvant à l'intérieur du corps magnétique doux (4a).

3. Machine électrique polyphasée à couches d'enroulement préfabriquées selon la revendication 2,
**caractérisée** en ce que la section du conducteur d'une corde conductrice (23 au 35) d'une couche d'enroulement (4d), ladite corde conductrice possédant dans des zones partielles (26, 32 au 38a, 38b), lesquelles se dirigent en direction de la rainure, mais qui se trouvent en même temps en dehors du corps magnétique doux (4a) et lesquelles ont des sections réduites en direction de la profondeur de la rainure, la réduction desdites sections du conducteur créant un espace dans lequel se trouvent des liens (25, 33 au 37a, 37b) des autres cordes conductrices (22, 24 au 34) de la même couche d'enroulement.

4. Machine électrique polyphasée à couches d'enroulement préfabriquées selon la revendication 1,
**caractérisée** en ce que la section du conducteur d'une corde conductrice (23, 24 au 36) d'une couche d'enroulement, ladite corde conductrice possédant dans des zones partielles (26, 28, 32 au 40a, 40b), lesquelles se dirigent en direction de la rainure, mais qui se trouvent en même temps en dehors du corps magnétique doux (4a), et lesquelles sont plus grandes en direction de la largeur de la rainure en comparaison avec les zones partielles (13a - d) à l'intérieur du corps magnétique doux (4a).

5. Machine électrique polyphasée à couches d'enroulement préfabriquées selon la revendication 1, dans laquelle les cordes conductices des couches d'enroulement différentes se trouvent l'une sur l'autre en direction de la profondeur de la rainure,
**caractérisée** en ce qu'une couche d'enroulement dans laquelle des zones partielles (25, 27 au 37a, 39a) des cordes conductices (22, 23 au 34, 35) se dirigent en direction de la largeur de la rainure, lesdites zones partielles des cordes conductrices de phases différentes se trouvent l'une derrière l'autre en direction de la rainure, mais aussi ayent la même distance envers la plaine de la fente d'air.

6. Machine électrique polyphasée à couches d'enroulement préfabriquées selon la revendication 1,
**caractérisée** en ce que la somme des longueurs des deux bouts des barres de la rainure (15c' et 15") lesquelles sont liés à une barre de la rainure, cette somme étant pareille pour toutes cordes conductices (22, 23, 24) d'une couche d'enroulement (4d).

7. Machine électrique polyphasée à couches d'enroulement préfabriquées selon la revendication 1,
**caractérisée** en ce qu'une couche d'enroulement (4d) dans laquelle des zones partielles (37a,37b au 39a, 39b) des cordes conductrices (34, 35)se dirigent en direction de la largeur de la rainure, lesdites zones partielles ont la même distance du corps magnétique doux (4a) en les deux têtes d'enroulement.

8. Machine électrique polyphasée à couches d'enroulement préfabriquées selon l'une des revendications précédentes,
**caractérisée** en ce que les cordes conductrices (45, 46) se trouvent l'une sur l'autre en direction de la profondeur de la rainure et lesquelles sont déplacées par une division du pôle, la hauteur du conducteur en direction de la profondeur de la rainure correspond en des parties des liéns (14b - d) à la double hauteur du conducteur des barres de la rainure (13a - d).

9. Machine électrique polyphasée à couches d'enroulement préfabriquées selon l'une des revendications précédentes, ladite machine électrique étant une armature disque permanentement excitée,
**caractérisée** en ce que l'armature disque permanentement excitée à l'intérieur de la roue sert d'entraînement directe, le disque du rotor (3) étant lié à la jante (1) par un pignon qui transmet sans jeu la force dans la jante.

10. Machine électrique polyphasée à couches d'enroulement préfabriquées selon l'une des revendications précédentes,
**caractérisée** en ce qu'un élément plat pour refroidir dans lequel coule un moyen de refroidir, est situé entre deux couches d'enroulement (4d).
